# EUROPEAN PATENT SPECIFICATION

(11) **EP 0 890 489 B1**
(45) Date of publication and mention of the grant of the patent: **18.07.2001**
(21) Application number: 98108739.8
(22) Date of filing: 14.05.1998
(51) Int. Cl.: B60R 22/24

(54) **A safety belt attachment system for the rear of a motor vehicle**
Verankerungsvorrichtung für den Sicherheitsgurt der Hintersitze eines Kraftfahrzeugs
Système de fixation de ceinture de sécurité pour siège arrière de véhicule

(30) Priority: 03.07.1997 IT TO970582
(43) Date of publication of application: 13.01.1999
(73) Proprietor: FIAT AUTO S.p.A., 10135 Torino (IT)
(72) Inventor: Pierallini, Mauro, 10100 Torino (IT)
(74) Representative: Di Francesco, Gianni

(56) References cited:
- DE-A- 3 027 205
- FR-A- 2 701 906
- US-A- 2 898 976
- US-A- 5 253 896
- PATENT ABSTRACTS OF JAPAN vol. 016, no. 214 (M-1251), 20 May 1992 & JP 04 038242 A (SUZUKI MOTOR CORP), 7 February 1992

## Description

The present invention relates to a system for attaching a safety belt within the passenger compartment of a motor vehicle. More particularly, the present invention refers to a safety belt attachment arrangement according the preamble of claim 1 such as that disclosed in FR-A-2 701 906, which relates to a system for providing attachment to the roof of the vehicle. Such a system is comprised of a support to which there are fixed, in a lengthwise succession, a hook to which the belt can be fixed when not in use, a transmission for the belt and a reel. The support is fixed to the vehicle roof by means of the two cross members that in three-volume motorcars are located one at the vehicle body upright near the rear side window, and the other at the upper edge of the rear door.

Such an arrangement has an inconvenience in that it is not applicable to those motorcars lacking two cross members in the rear part of the roof.

Further, the support element fixed to the cross members is rather long and bulky, as it has to connect the two cross members and sustain the entire tensile stress applied by the belt to the transmission first and then to the belt retractor reel.

Finally, with some motorcars the position of the belt transmission could turn out to be too advanced to be used correctly.

To overcome the above prior art drawbacks, the present invention provides a system for attaching a motorcar rear seat safety belt having three attachment points, of the type comprising a support connected to the motorcar roof to which there are fixed in a longitudinal succession a hooking means for fixing the belt anchoring tongues when not in use, a belt retractor reel and a belt transmission, characterised in that the support is an element of bent plate projecting in the forward direction from a part of the roof cross member proximate to the upper edge of the rear window or rear door, and in that disposed at the end of said projecting part is the hooking means for at least one of the belt anchoring tongues, the belt retractor reel being fixed to said projecting part behind said hooking means, and the belt transmission is mounted to said cross member at a location where said support is fixed to said cross member.

Further features and advantages of the present invention will be apparent from the ensuing description. Reference is made to the accompanying drawings, in which:
- FIG. 1: is a schematic perspective view showing an example of a vehicle in wherein the central back seat is fitted with a safety belt arranged in accordance with the present invention;
- FIG. 2: is a longitudinal cross sectional view of the safety belt attachment system of FIG. 1 mounted to the inside face of the vehicle roof, the safety belt being illustrated in both the resting and the retracted positions; and
- FIG. 3: is a cross sectional view, to a smaller scale, of a detail of FIG. 2.

Referring to the drawings, numeral 1 designates the rear part of the passenger compartment of a motorcar 3 where three flanked rear seats 5 are arranged. The central seat 7 on which a person is sitting is provided with a safety belt 9 comprised of an abdominal part 9a and a shoulder part 9b.

The belt 9 is fitted with two tongues 11 and 13 that allow anchoring to the two attachment points at the passenger's sides and define the two ends of the abdominal part 9a of the belt. Tongue 11 is fixed to the end of the safety belt, while tongue 13 is connected to the belt through a slot 15 that allows the belt to slide therealong to adapt to the size of the passenger.

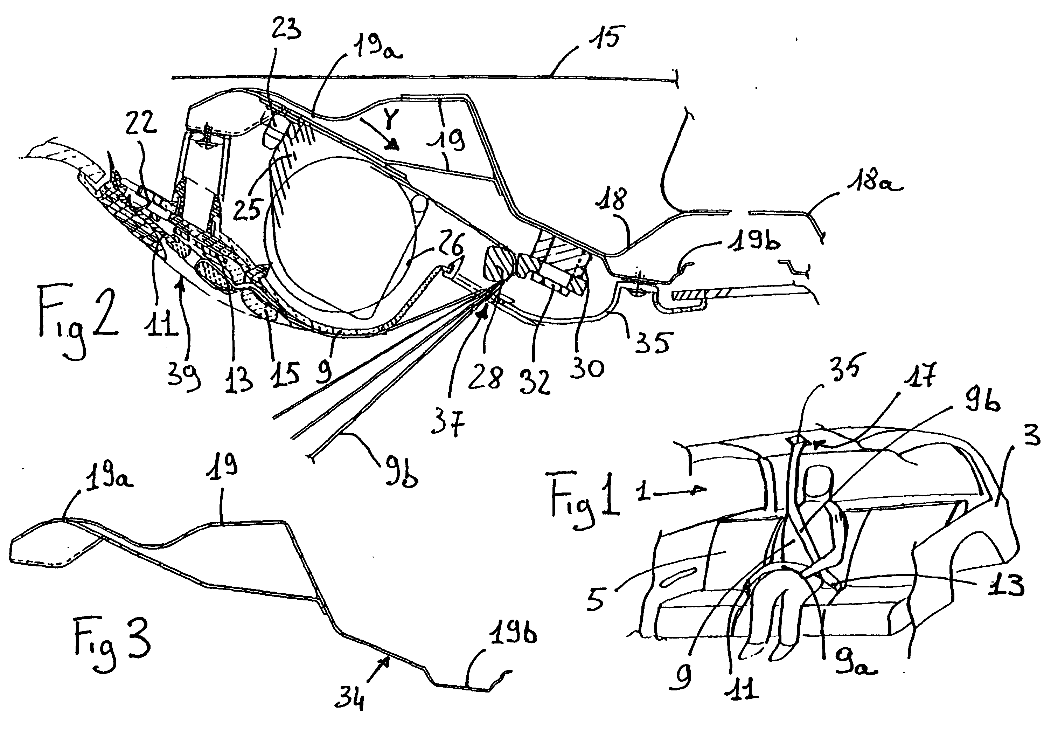

The third, upper attachment point 17 of the belt is located at the inner side of the roof. This attachment point, which defines with tongue 13 the shoulder portion 9b of the belt, will now be described in further detail referring in particular to FIG. 2.

As shown in FIG. 2, the roof 15 has a cross member 18 extending transversally with respect to the lengthwise axis of the vehicle. Cross member 18 is disposed proximate to the upper edge of the rear door 18a or of the rear window, where no rear door is provided.

The upper attachment 17 is essentially constituted by a partially bent plate support 19, more clearly shown in cross section in FIG. 3. The support 19 is fixed to a part of the cross member 18 in known manner, e.g. by welding, and copies the shape thereof. In comparison with the width of cross member 18, the support 19 has a considerable projecting front portion 19a facing the front side of the vehicle and a small projecting rear portion 19b facing the rear side of the vehicle.

The support 19 bears a hooking means 22 fixed to the front end of the projecting front portion 19a, for coupling to the tongues 11 and 13 when the belt is not used. Also fixed to the end 19a by a bolt 23, at a slightly backward location with respect to the hooking means 22, is the housing 25 for a belt retractor reel 26 facing the rear part of the vehicle.

Fitted to the support 19 connected to the cross member 18, is a transmission 28 of the belt 9, in form of a ring pivotally mounted about is mounting axle. The transmission 28 is mounted on a spacer 30 and connected to the portion of cross member 18 by a bolt 32 passing thorough an aperture 34 formed in the support 19, such that said support is not directly affected by the tensile forces exerted by the belt.

Connected to the rearward projecting appendix 19b is a cover 35 for covering the attachment 17 to the roof. The cover is provided with apertures 37 and 39, for allowing, respectively, the passage of the belt 9 and for fixing the tongues 11 and 13 in their rest position.

As apparent from FIG. 2, the attachment 17 of this invention is of reduced size to be easily fitted to the roof. Moreover, tensile stresses are discharged onto the transmission 28 which is in an ideal position, as it is far back enough relative to the passenger's shoulders and anchored to the vehicle body cross member. The projecting arrangement of the belt reel allows for energy absorption to a certain extent in case of a crash occurring. Tests have shown that the box-like portion 19, particularly its part 19a, in the event of a crash occurring is compressed and bent in the direction of arrow Y, with no risk of interfering with the head of the passengers.

While a specific embodiment of the invention has been disclosed, it is to be understood that such disclosure has been merely for the purpose of illustration and that the invention is not to be limited in any manner thereby. Various modifications as to shape and dimensions will be apparent to those skilled in the art in view of the claims.

## Claims

1. A system for attaching a motorcar rear seat safety belt having three attachment points, of the type comprising a support (19) connected to the motorcar roof (15) to which there are fixed in a longitudinal succession a hooking means (28) for fixing the belt anchoring tongues when not in use, a belt retractor reel and a belt transmission, the support (19) is an element of bent plate with a projecting part (19a), the support (19) projecting in the forward direction from a part of the roof cross member (18) proximate to the upper edge of the rear window or rear door, and in that disposed at the end of said projecting part (19a) is the hooking means (22) for at least one of the belt anchoring tongues, the belt retractor reel (26) being fixed to said projecting part (19a) behind said hooking means (22), characterised in that the belt transmission (28) being mounted to said cross member at a location where said support (19) is fixed to said cross member (18).

2. An attachment system as claimed in claim 1, characterised in that the front projecting part (19a) of said support (19) is adapted to bend in the event of a high tensile stress acting on the safety belt.

3. An attachment system as claimed in claim 1, characterised in that said support (19) provides a rearwardly projecting appendix (19b) on which there is fixed a cover element for covering the whole attachment (17).

## Patentansprüche

1. System zum Befestigen eines Sicherheitsgurtes für den Rücksitz eines Kraftwagens, aufweisend drei Befestigungspunkte, von der Art, umfassend eine Tragvorrichtung (19), die mit dem Kraftwagendach (15) verbunden ist, an welchem in einer Aufeinanderfolge der Länge nach eine Hakeneinrichtung (22) zum Anbringen der Verankerungsdorne der Gurte, wenn sie nicht in Verwendung sind, sowie eine Gurtaufwickelrolle und ein Gurtgetriebe angebracht sind, wobei die Tragvorrichtung (19) ein gebogenes Plattenelement mit einem sich vorstreckenden Teil (19a) ist, wobei sich die Tragvorrichtung (19) von einem Teil des Dachquerträgers (18) unmittelbar an der Oberkante des Heckfensters oder der Hecktür in die Vorwärtsrichtung vorstreckt und wobei am Ende des sich vorstreckenden Teiles (19a) die Hakeneinrichtung (22) für mindestens einen der Gurtverankerungsdorne eingerichtet ist, wobei die Gurtaufwickelrolle (26) am sich vorstreckenden Teil (19a) hinter der Hakeneinrichtung (22) angebracht ist, dadurch gekennzeichnet, daß das Gurtgetriebe (28) am Querträger an einer Stelle befestigt ist, wo die Tragvorrichtung (19) am Querträger (18) angebracht ist.

2. Befestigungssystem nach Anspruch 1, dadurch gekennzeichnet, daß der sich vorstreckende Vorderteil (19a) der Tragvorrichtung (19) angepaßt ist, um sich im Fall, daß eine hohe Zugspannung auf den Gurt wirkt, zu biegen.

3. Befestigungssystem nach Anspruch 1, dadurch gekennzeichnet, daß die Tragvorrichtung (19) einen sich rückwärts vorstreckenden Fortsatz (19b) vorsieht, auf welchem ein Abdeckungselement zum Abdecken der gesamten Befestigung (17) angebracht ist.

## Revendications

1. Système pour la fixation d'une ceinture de sécurité de siège arrière d'automobile, comportant trois points de fixation, du type comprenant un support (19) relié au toit (15) de l'automobile, auquel sont fixés, successivement dans la longueur, un moyen d'accrochage (28) pour fixer les languettes d'ancrage de ceinture lorsqu'elle n'est pas en utilisation, un enrouleur de ceinture et une transmission de ceinture, le support (19) est un élément constitué d'une plaque coudée munie d'une partie en saillie (19a), le support (19) faisant saillie dans une direction vers l'avant d'une partie de l'élément transversal (18) de toit à proximité du bord supérieur de la fenêtre arrière, ou de la porte arrière, et le moyen d'accrochage (22) d'au moins l'une des languettes d'ancrage de ceinture est disposé au niveau de l'extrémité de ladite partie en saillie (19a), l'enrouleur de ceinture (26) étant fixé à ladite partie en saillie (19a) derrière ledit moyen d'accrochage (22), caractérisé en ce que la transmission de ceinture (28) est montée sur ledit élément transversal à un emplacement où ledit support (19) est fixé audit élément transversal (18).

2. Système de fixation selon la revendication 1, caractérisé en ce que la partie avant en saillie (19a) dudit support (19) est apte à se plier dans l'éventualité d'une forte contrainte de traction agissant sur la ceinture de sécurité.

3. Système de fixation selon la revendication 1, caractérisé en ce que ledit support (19) fournit un appendice en saillie vers l'arrière (19b) sur lequel est fixé un élément formant cache servant à couvrir toute la fixation (17).
